# EUROPÄISCHE PATENTSCHRIFT

(11) **EP 3 367 226 B1**
(45) Veröffentlichungstag und Bekanntmachung des Hinweises auf die Patenterteilung: **04.10.2023**
(21) Anmeldenummer: 18154451.1
(22) Anmeldetag: 31.01.2018
(51) Int. Cl.: G06F 3/04817, G06F 3/0482, G06F 3/0485, G06F 3/0362, G06F 3/04883

(54) **BEDIENSYSTEM, VERFAHREN ZUM BEDIENEN EINES BEDIENSYSTEMS UND EIN FAHRZEUG MIT EINEM BEDIENSYSTEM**
OPERATING SYSTEM, METHOD FOR OPERATING AN OPERATING SYSTEM AND A MOTOR VEHICLE PROVIDED WITH OPERATING SYSTEM
SYSTÈME D'EXPLOITATION, PROCÉDÉ DE FONCTIONNEMENT D'UN SYSTÈME D'EXPLOITATION ET VÉHICULE DOTÉ D'UN SYSTÈME D'EXPLOITATION

(30) Priorität: 24.02.2017 DE 102017001806
(43) Veröffentlichungstag der Anmeldung: 29.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85055 Ingolstadt (DE); Güllich, Johannes, 85229 Markt Indersdorf (DE)
(74) Vertreter: v. Bezold & Partner Patentanwälte - PartG mbB

(56) Entgegenhaltungen:
- DE-A1- 10 222 063
- US-A1- 2012 272 181
- US-A1- 2013 106 914
- US-A1- 2015 363 052

## Beschreibung

Die Erfindung betrifft ein Bediensystem, ein Verfahren zum Bedienen eines Bediensystems und ein Fahrzeug mit einem Bediensystem.

Solche Bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen über eine bestimmte Fahrzeugfunktion abrufen kann. Wesentliche Bestandteile des Bediensystems sind ein Eingabeelement, eine Anzeigevorrichtung und eine Steuervorrichtung, wobei das Eingabeelement und die Anzeigevorrichtung an die Steuervorrichtung gekoppelt sind und die Steuervorrichtung derart ausgestaltet ist, dass sie - insbesondere abhängig von einer Eingabe des Nutzers mittels des Eingabeelements - eine Anzeige auf der Anzeigevorrichtung steuert bzw. kontrolliert.

Wegen der Vielzahl an Funktionen oder abrufbaren Informationen, die an das Bediensystem gekoppelt sind, werden beispielsweise einzelne Themenkomplexe einem als Oberbegriff dienenden Listenelement, das der Nutzer wiederum mittels des Bediensystems auswählen kann, um Zugang zu den gewünschten Informationen oder Funktionalitäten zu erhalten, zugeordnet. Hierbei erfolgt ein Wechsel zwischen den jeweils aktuell angewählten Listenelementen typischerweise durch einen Listendurchlauf bzw. durch ein Scrollen. Da aus Platzgründen in der Regel nur ein Teil der Listenelemente auf der Anzeigefläche abgebildet ist, rücken mittels eines Bildlaufs üblicherweise nacheinander Listenelemente auf die Anzeigefläche der Anzeigevorrichtung nach. Dabei sind die Listenelemente in einer Liste mit einem Listenanfang und einem Listenende sortiert. Aus dem Stand der Technik sind solche Bediensysteme bekannt, bei denen der Listenanfang und das Listenende jeweils einen Anschlag bilden, an dem ein Fortsetzen des Listendurchlaufs in die bisherige Durchlaufrichtung nicht möglich ist, oder solche, bei denen die Listenelemente als Endlosliste dargestellt sind und der Listendurchlauf in Listendurchlaufrichtung beim Erreichen des Listenendes unmittelbar beim Listenanfang fortgesetzt wird. Bei einer Liste mit Anschlägen muss der Nutzer gegebenenfalls durch die gesamte Liste durchscrollen, wenn er zwischen zwei Listenelementen wechseln möchte. Dies kostet den Nutzer Zeit. Die Bediensysteme mit einer Endlosliste, bei denen der Listendurchlauf einfach am Listenanfang fortgesetzt wird, wenn das Listenende erreicht wird, erfordern ein hohes Maß an Aufmerksamkeit, damit der Nutzer nicht den Listenanfang bzw. das Listenende verpasst.

US 2012/0272181 A1 beschreibt ein Verfahren und eine Vorrichtung zur intuitiven Bedienung von Endloslisten, wobei der Anzeigebereich der Liste bei Erreichen des Listenendes sprunghaft auf den Listenanfang gesetzt wird.

US 2015/0363052 A1 beschreibt ein Verfahren zur Auswahl eines Elements aus einer Liste, wobei bei Erreichen eines spezifischen Elements eine Zeitspanne der Inaktivität ausgelöst wird, innerhalb derer Nutzereingaben bezüglich des Bildlaufs ignoriert werden.

Es ist daher eine Aufgabe der vorliegenden Erfindung ein Bediensystem bereitzustellen, mit dem im Vergleich zum Stand der Technik eine Anwahl einzelner Listenelemente einer Liste mit einem Listenanfang und einem Listenende vereinfacht ist.

Diese Aufgabe wird durch ein Bediensystem, ein Verfahren zum Betreiben des Bediensystems und ein Fahrzeug mit einem Bediensystem mit den Merkmalen des unabhängigen Anspruchs gelöst. Vorteilhafte Ausführungsformen und Anwendungen der Erfindung ergeben sich aus den anhängigen Ansprüchen und werden in der folgenden Beschreibung unter teilweiser Bezugnahme auf die Figuren näher erläutert.

Gemäß einem ersten Gesichtspunkt ist ein Bediensystem für ein Fahrzeug vorgesehen, das eine Anzeigevorrichtung mit einer Anzeigefläche, ein Eingabeelement und eine Steuervorrichtung umfasst. Die anwählbaren Listenelemente sind in einer Liste mit einem Listenanfang und einem Listenende sortiert und in einer Speichereinrichtung gespeichert. Zudem ist die Steuervorrichtung an das Eingabeelement und die Anzeigevorrichtung gekoppelt, wodurch insbesondere eine kommunikative Verbindung einerseits zwischen der Steuervorrichtung und dem Eingabeelement und andererseits zwischen der Steuervorrichtung und der Anzeigevorrichtung realisiert ist.

Grundsätzlich ist die Steuervorrichtung dabei derart ausgestaltet, dass mit ihr eine wiedergebende Anzeige auf der Anzeigefläche steuerbar ist. Dadurch lassen sich beispielsweise von dem Eingabeelement kommende Befehle, beispielsweise für einen Listendurchlauf bzw. für ein Scrollen, durch die Steuervorrichtung auf der Anzeigefläche visualisieren. Unter Steuern ist dabei grundsätzlich sowohl eine Veranlassung einer Anzeige als auch eine Modifikation des auf der Anzeige Dargestellten zu verstehen.

Dabei ist es erfindungsgemäß vorgesehen, dass die Steuervorrichtung so konfiguriert ist, dass sie die Anzeigefläche derart ansteuert, dass zumindest ein Teil der Listenelemente auf der Anzeigefläche in Form einer endlos rollierenden Liste dargestellt wird. Bevorzugt werden die Listenelemente derart in Form einer endlos rollierenden Liste dargestellt, dass auf der Anzeigefläche der Listenanfang und das Listenende zeitgleich als benachbarte Listenelemente dargestellt sind, wenn der Listendurchlauf sich am Listenanfang bzw. Listenende befindet. Zum Wechseln zwischen angewählten Listenelementen ist ein durch ein Betätigungsvorgang am Eingabeelement veranlasster Listendurchlauf bzw. veranlasstes Scrollen in eine Listendurchlaufrichtung vorgesehen. Erfindungsgemäß ist es vorgesehen, dass beim Erreichen des Listenanfangs oder des Listenendes der Listendurchlauf in eine bisherige Listendurchlaufrichtung gestoppt wird, insbesondere automatisch gestoppt wird, und eine Wiederaufnahme des gestoppten Listendurchlaufs durch einen direkten Übergang vom Listenende zum Listenanfang oder durch einen direkten Übergang vom Listenanfang zum Listenende erst nach Ablauf eines festgelegten Zeitintervalls, das sich an ein Unterbrechen des Betätigungsvorgangs am Eingabeelement anschließt, freigegeben wird. Dadurch bildet sich insbesondere ein sogenannter Softanschlag aus. Dabei ist es vorgesehen, dass das Bediensystem derart ausgestaltet ist, dass unmittelbar vor und/oder unmittelbar nach Erreichen des Listenanfangs oder des Listenendes ein optisches, akustisches und/oder haptisches Signal erzeugt wird. Hierbei ist unter unmittelbar vor bzw. nach vorzugsweise ein solches Zeitfenster zu verstehen, dass kürzer oder gleichlang wie das festgelegte Zeitintervall ist.

Gegenüber dem Stand der Technik hat das erfindungsgemäße Bediensystem den Vorteil, dass der Nutzer sowohl über das Erreichen des Listenanfangs bzw. des Listenendes informiert wird, als auch dass er den Listendurchlauf in die bisherige Listendurchlaufrichtung nach Ablauf des festgelegten Zeitintervalls fortsetzen kann, um möglichst schnell die Listenelemente anzusteuern, die näher am Listenanfang als am Listenende positioniert sind. Insbesondere kann der Nutzer durch das Eingabeelement einen Listendurchlauf in eine Listendurchlaufrichtung beginnen, ohne seine ungeteilte Aufmerksamkeit auf die Anzeigefläche zu richten, um den Listenanfang bzw. das Listenelement beim Scrollen nicht zu verpassen. Stattdessen wird er durch das optische, akustische und/oder haptische Signal über die aktuelle Position beim Listendurchlauf, nämlich über das Erreichen des Listenanfangs oder des Listenendes, informiert. Folge ist eine vereinfachte Bedienung des Listendurchlaufs, die es dem Nutzer, insbesondere einem Fahrer, erlaubt, seinen Fokus auf die aktuelle Verkehrslage zu richten.

Als besonders vorteilhaft erweist sich im Besonderen der Umstand, dass das festgelegte Zeitintervall erst dann beginnt, wenn der Betätigungsvorgang für den Listendurchlauf in die bisherige Listendurchlaufrichtung unterbrochen wurde. Dadurch lässt sich vermeiden, dass der Nutzer durch ein Fortsetzen des Betätigungsvorgangs am Eingabeelement versehentlich den Listendurchlauf fortsetzt, wenn er das optische, akustische und/oder haptische Signal nicht registriert. Wenn er nach einer Weile auf die Anzeigevorrichtung blickt, wird der Nutzer stattdessen erkennen, dass er sich an das Listenende oder den Listenanfang navigiert hat.

Durch ein Unterbrechen des Betätigungsvorgangs am Eingabeelements und nach einem anschließenden Abwarten des Zeitintervalls lässt sich der Listendurchlauf dann entsprechend am Listenanfang bzw. Listenende wiederaufnehmen. Außerdem kann der Fahrer den Betätigungsvorgang bewusst trotz des Wahrnehmens eines optischen, akustischen und/oder haptischen Signals fortsetzten, wenn er plötzlich seine Aufmerksamkeit dem aktuellen Verkehr widmen muss. Im Anschluss muss er mit der Auswahl des Listenelements nicht von vorne anfangen, sondern setzt die Auswahl zu einem von ihm bestimmten Zeitpunkt an einer festgelegten Position, d. h. dem Listenanfang oder Listenende, fort. Vorzugsweise handelt es sich beim dem Listendurchlauf um einen Bildlauf, d. h. einen Listendurchlauf bei dem Listenelemente auf die Anzeigefläche nachrücken.

Vorzugsweise ist es vorgesehen, dass das Bediensystem Teil eines Infotainmentsystems ist. Weiterhin ist es insbesondere vorgesehen, dass die Steuervorrichtung als Prozessor mit einem abgespeicherten Computerprogramm ausgebildet ist. Dabei ist es vorstellbar, dass die Steuervorrichtung räumlich getrennt ist von der Anzeigevorrichtung und dem Eingabeelement. Ferner ist es denkbar, dass die Speichereinrichtung in die Steuervorrichtung integriert ist. Beispielsweise ist die Anzeigevorrichtung in das Armaturenbrett eingelassen. Vorstellbar ist auch, dass das Bediensystem derart ausgestaltet ist, dass ein weiteres optisches, akustisches und/oder haptisches Signal ausgesendet wird, wenn nach dem Erreichen des Listenanfangs oder des Listenendes der Betätigungsvorgang am Eingabeelement nicht unterbrochen wird. Durch das wiederholte Signal wird der Nutzer erneut auf das Erreichen des Listenanfangs oder des Listenendes aufmerksam gemacht. Vorzugsweise unterscheidet sich das optische, akustische und/oder haptische Signal von dem weiteren optischen, akustischen und/oder haptischen Signal. Beispielsweise wird der Nutzer zunächst mit einem optischen Signal und anschließend mit einem akustischen und/oder haptischen Signal auf das Erreichen des Listenanfangs oder des Listenendes aufmerksam gemacht. Durch das Ansprechen des Nutzers über verschiedene Wahrnehmungskanäle wird in vorteilhafter Weise die Wahrscheinlichkeit erhöht, dass der Nutzer das Erreichen des Listenanfangs oder des Listendes wahrnimmt.

Gemäß einer weiteren Ausführungsform der vorliegenden Erfindung ist es vorgesehen, dass die Anzeigefläche durch die Steuervorrichtung derart ansteuerbar ist, dass die Anzeigefläche beim Erreichen des Listenendes oder des Listenanfangs ein optisches Signal bereitstellt, dass den Nutzer auf das Listenende bzw. den Listenanfang visuell hinweist. Beispielsweise wird vorwiegend oder ausschließlich ein optisches Signal beim Erreichen des Listenanfangs oder des Listenendes ausgegeben. Die Nutzung der Anzeigefläche hat den Vorteil, dass keine zusätzlichen Bauteile erforderlich sind, mit denen der Nutzer über das Erreichen des Listenanfangs oder des Listenendes informiert wird. Vorstellbar ist dabei, dass die Anzeigefläche beim Erreichen des Listenanfangs oder des Listenendes seine Farbe wechselt oder kurzfristig aufflackert. Solche Veränderungen können vom Nutzer auch durch ein peripheres Sehen zur Kenntnis genommen werden.

Vorzugsweise ist es vorgesehen, dass die Anzeigefläche durch die Steuervorrichtung derart ansteuerbar ist, dass zwischen dem Listenanfang und dem Listenende ein Leerelement angeordnet ist, wobei sich insbesondere das Leerelement in seiner visuellen Darstellung von den Listenelementen unterscheidet. Beispielsweise unterscheidet sich das Leerelement von den Listenelementen durch seine Farbe und dadurch, dass das Leerelement keine Information bzw. keinen Sammelbegriff bereitstellt. Mit anderen Worten: das Listenelement ist ein Platzhalter zwischen dem Listenende und dem Listenanfang. Weiterhin ist es vorstellbar, dass das Leerelement beim Erreichen des Listenanfangs oder des Listenendes seine Farbe wechselt und ein erneuter Farbwechsel, beispielsweise in die ursprüngliche Farbe, erfolgt, sobald das festgelegte Zeitintervall abgelaufen ist. Dadurch lässt sich dem Nutzer in vorteilhafter Weise vermitteln, dass er nun den Listendurchlauf in die bisherige Listendurchlaufrichtung fortsetzen kann. Weiterhin ist es vorstellbar, dass das Leerelement auswählbar oder nicht-auswählbar ist. Alternativ ist es auch vorstellbar, dass zwischen dem Listenanfang und dem Listenende ein nicht-auswählbare Trennlinie angeordnet ist.

In einer weiteren vorteilhaften Ausführungsform der vorliegenden Erfindung ist es vorgesehen, dass die Anzeigefläche durch die Steuervorrichtung derart ansteuerbar ist, dass eine Listendurchlaufgeschwindigkeit abhängt von einem in Listendurchlaufrichtung bemessenen Listenabstand zwischen dem aktuell angewählten Listenelement und dem Listenanfang oder zwischen dem aktuell angewählten Listenelement und dem Listenende, wobei insbesondere mit abnehmenden Listenabstand die Listendurchlaufgeschwindigkeit kleiner wird, insbesondere kontinuierlich kleiner wird, bis der Listendurchlauf am Listenende oder am Listenanfang stoppt. Dadurch lässt sich eine animierte Bremsbewegung des Listendurchlaufs realisieren, die den Nutzer über das Erreichen des Listenanfangs oder des Listenendes informiert.

Die Anzeigefläche ist durch die Steuervorrichtung derart ansteuerbar, dass die Wiederaufnahme des Listendurchlaufs nach Ablauf des Zeitintervalls automatisch realisiert wird, wobei ohne weitere Betätigung des Eingabeelements die Listendurchlaufgeschwindigkeit mit zunehmendem Abstand des aktuellen Listenelements vom Listenanfang bzw. Listenende abnimmt bis der Listendurchlauf bei einem Listenelement in der Liste stehen bleibt.

In einer nicht beanspruchten Ausführungsform ist es vorgesehen, dass die Anzeigefläche durch die Steuervorrichtung derart ansteuerbar ist, dass nach Ablauf des Zeitintervalls die Wiederaufnahme des Listendurchlaufs durch den den Listendurchlauf in die bisherige Listendurchlaufrichtung veranlassenden Betätigungsvorgang am Eingabeelement realisierbar ist.

Gemäß einer weiteren Ausführungsform der vorliegenden Erfindung ist vorgesehen, dass beim, unmittelbar vor und/oder unmittelbar nach dem Erreichen des Listenanfangs oder des Listenendes neben dem optischen Signal ein haptisches Signal, beispielsweise in Form eines haptisch wahrnehmbaren Widerstands bei der Betätigung des Eingabeelements oder in Form einer Vibration am Eingabeelement, erzeugt wird. Durch das zusätzliche haptische Signal wird die Wahrscheinlichkeit erhöht, dass der Nutzer den Listenanfang bzw. das Listenende wahrnimmt. Hierbei ist es vorstellbar, dass das optische und das haptische Signal zeitgleich oder zeitversetzt realisiert werden. Es ist auch denkbar, dass das haptische Signal nach Ablauf des festgelegten Zeitintervalls ausgesendet wird, um den Nutzer über das Ablaufen des Zeitintervalls zu informieren.

In einer weiteren Ausführungsform der vorliegenden Erfindung ist vorgesehen, dass das Bediensystem derart gestaltet ist, dass, unmittelbar vor und/oder unmittelbar nach dem Erreichen des Listenanfangs oder des Listenendes neben dem optischen Signal ein akustisches Signal, beispielsweise in Form eines Klick- oder Brummgeräuschs, erzeugt wird. Hierbei ist es vorstellbar, dass das optische und das akustische Signal zeitgleich oder zeitversetzt realisiert werden. Es ist auch denkbar, dass das akustische Signal nach Ablauf des festgelegten Zeitintervalls ausgesendet wird, um den Nutzer über das Ablaufen des Zeitintervalls zu informieren. Vorzugsweise wird als akustisches Signal ein dezentes Geräusch gewählt, um den Nutzer nicht beim Erreichen des Listenendes oder des Listenanfangs zu erschrecken.

Vorzugsweise ist es vorgesehen, dass die Anzeigefläche durch die Steuervorrichtung derart ansteuerbar ist, dass die Wiederaufnahme des Listendurchlaufs in eine der bisherigen Listendurchlaufrichtung entgegengesetzten Listendurchlaufrichtung nach Beendigung eines den Listendurchlauf veranlassenden Betätigungsvorgangs am Eingabeelement für ein festgelegtes Zeitintervall unterbunden wird, wobei erst nach Ablauf des Zeitintervalls die Wiederaufnahme des Listendurchlaufs in einer der bisherigen Listendurchlaufrichtung folgenden oder in einer der bisherigen Listendurchlaufrichtung entgegengesetzten Listendurchlaufrichtung freigegeben wird.

Weiterhin ist es in einer bevorzugten Ausführungsform der vorliegenden Erfindung vorgesehen, dass das festgelegte Zeitintervall zwischen 0,3 s bis 3 s, bevorzugt 0,5 s und 2 s, besonders bevorzugt zwischen 0,75 s und 1,5 s andauert. Beispielsweise dauert das festgelegte Zeitintervall im Wesentlichen eine Sekunde an. Durch diese vergleichsweise kurzen Zeitintervalle wird dem Nutzer einerseits genügend Zeit zur Verfügung gestellt, in der er sich auf den Sprung vom Listenanfang zum Listenende vorbereiten kann, und anderseits verzögert ein solches Zeitintervall nicht die Auswahl eines Listenelements am Bediensystem.

Insbesondere ist es vorgesehen, dass die Anzeigefläche durch die Steuervorrichtung derart ansteuerbar ist, dass die Listenelemente als Listeneinträge und/oder als Informationsfenster ausgestaltet sind, wobei insbesondere ein Listendurchlauf entlang einer geraden oder gebogenen Listendurchlaufrichtung durchgeführt wird, wobei vorzugsweise die gerade Listendurchlaufrichtung horizontal oder vertikal auf der Anzeigefläche verläuft. Unter einem Informationsfenster ist eine flächige bzw. kachelförmige Darstellung zu verstehen, auf der - beispielsweise in Form von Graphiken oder Illustrationen - ein dem Listenelement zugeordneter fahrzeugrelevanter Themenkomplex angezeigt ist. Vorzugsweise kann der Nutzer seine bevorzugte Darstellungsform des Teils der Listenelemente, die auf der Anzeigefläche abgebildet sind, selbst einrichten bzw. einstellen.

Gemäß einer weiteren Ausführungsform der vorliegenden Erfindung ist vorgesehen, dass das Eingabeelement einen Drehdrückschalter, eine Walze, ein Touchscreen und/oder einen Taster auf einem Multifunktionslenkrad oder auf einem Lenkstockhebel umfasst. Vorstellbar ist insbesondere, dass die Walze in das Multifunktionslenkrad integriert ist. Dadurch lässt sich das Eingabeelement in einem leicht zugänglichen und im Blickfeld des Fahrers liegenden Bereich anordnen. Entsprechend muss der Fahrer seine Aufmerksamkeit nicht der Suche des passenden Eingabeelements, beispielsweise im Mittelkonsolenbereich, widmen.

In einer weiteren Ausführungsform der vorliegenden Erfindung ist es vorgesehen, dass die Anzeigefläche durch die Steuervorrichtung derart ansteuerbar ist, dass der Listendurchlauf mit einer Primärgeschwindigkeit oder einer Sekundärgeschwindigkeit zwischen den einzelnen Listenelementen wechselt, wobei insbesondere zur Einnahme eines Vorspulmodus bedarfsabhängig ein Wechsel zwischen der Primärgeschwindigkeit zur Sekundärgeschwindigkeit während des Listendurchlaufs realisierbar ist. Dadurch lässt sich in vorteilhafter Weise gezielt ein Vorspulen veranlassen, mit dem das gewünschte Listenelement vergleichsweise schnell erreicht werden kann.

Ein weiterer Gegenstand der vorliegenden Erfindung ist ein Verfahren zum Bedienen eines erfindungsgemäßen Bediensystems, umfassend die Schritte:
-- Anwahl einzelner Listenelemente, die in einer Liste mit einem Listenanfang und einem Listenende sortiert sind, mittels eines Listendurchlaufs in eine Listendurchlaufrichtung,
-- Unterbinden des Listendurchlaufs beim Erreichen des Listenanfangs oder des Listenendes und
-- Freigabe des Listendurchlaufs in einer zur bisherigen Listendurchlaufrichtung gleichgerichteten Listendurchlaufrichtung, durch einen direkten Übergang vom Listenanfang zum Listenende oder durch einen direkten Übergang vom Listenende zum Listenanfang nach Ablauf eines festgelegten Zeitintervalls, das mit einer Unterbrechung eines Bedienvorgangs am Eingabeelement beginnt,
wobei vom Bediensystem ein optisches, akustisches und/oder haptisches Signal beim Erreichen, unmittelbar vor und/oder unmittelbar nach des Listenanfangs oder des Listenendes ausgegeben wird.

Ein weiterer Gegenstand der vorliegenden Erfindung ist ein Fahrzeug, insbesondere Nutzfahrzeug, mit einem erfindungsgemäßen Bediensystem.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Fig. 1a bis 1c: Anzeigevorrichtungen mit verschiedenen Listendurchläufen;
- Fig. 2: eine Anzeigevorrichtung für ein Bediensystem gemäß einer ersten beispielhaften Ausführungsform der vorliegenden Erfindung;
- Fig. 3: eine Anzeigevorrichtung für ein Bediensystem gemäß einer zweiten beispielhaften Ausführungsform der vorliegenden Erfindung;
- Fig.4: ein Eingabeelement und eine Anzeigevorrichtung für ein Bediensystem gemäß einer dritten beispielhaften Ausführungsform der vorliegenden Erfindung; und
- Fig. 5: ein Eingabeelement für ein Bediensystem nach der vorliegenden Erfindung.

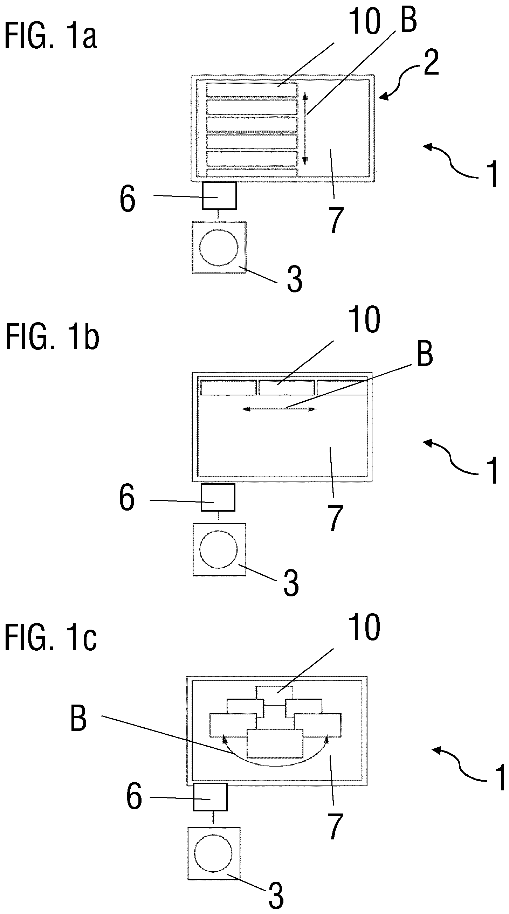

In den Figuren 1a bis 1c sind Anzeigevorrichtungen 2 für Bediensysteme 1 mit verschiedenen Listendurchläufen illustriert. Insbesondere handelt es sich um ein Bediensystem 1, das in ein Fahrzeug integriert ist und als Benutzerschnittstelle bzw. als Mensch-Maschinen-Schnittstelle dient. Beispielsweise ist das Bediensystem 1 Teil eines Infotainmentsystems. Hierzu umfasst das Bediensystem 1 ein Eingabeelement 3, eine Anzeigevorrichtung 2 und eine Steuervorrichtung 6, wobei die Steuervorrichtung 6 an das Eingabeelement 3 und die Anzeigevorrichtung 2 gekoppelt ist. Insbesondere ist die Steuervorrichtung 6 zur Steuerung einer Anzeige auf der Anzeigevorrichtung 2 mit einer Anzeigefläche 7 vorgesehen, wobei die Steuervorrichtung 6 derart ausgestaltet ist, dass sie die Anzeige veranlasst und vorzugsweise abhängig von einer Eingabe durch das Eingabeelement 3 die Anzeige modifiziert bzw. wechselt. Hierbei ist es vorgesehen, dass einzelne Fahrzeugfunktionalitäten oder Fahrzeuginformationen als Listenelemente 10 auf der Anzeigefläche 7 einem Nutzer zur Auswahl gestellt werden. Hierbei ist es insbesondere vorgesehen, dass der Nutzer mittels eines durch das Eingabeelement 3 veranlassten Listendurchlaufs zwischen den jeweils aktuell angewählten Listenelementen 10 wechseln kann. Um Platz auf der Anzeigefläche 7 zu sparen, ist es von Vorteil, wenn auf der Anzeigefläche 7 nur ein Teil der potentiell auswählbaren Listenelemente 10 angezeigt ist. Dabei ist es besonders bevorzugt vorgesehen, dass durch einen Bildlauf in eine Listendurchlaufrichtung bislang nicht auf der Anzeigefläche 7 dargestellte Listenelemente 10 nachrücken. In Figur 1 ist es dabei vorgesehen, dass die Listenelemente 10 übereinander angeordnet sind und eine Listendurchlaufrichtung B parallel zu einer vertikalen Richtung verläuft. Im Gegensatz dazu ist es in der Figur 1b dargestellten Ausführungsform vorgesehen, dass der Teil der Listenelemente 10, die auf der Anzeigefläche 7 dargestellt sind, horizontal nebeneinander angeordnet sind und eine Listendurchlaufrichtung B entlang einer im Wesentlichen horizontal verlaufenden Richtung ausgerichtet ist. In der in Figur 1c dargestellten Ausführungsform sind die einzelnen Listenelemente 10 entlang eines bogenförmigen Verlaufs nebeneinander angeordnet und lassen sich durch eine Bewegung entlang des bogenförmigen Verlaufs zum Wechseln des angewählten Listenelements 10 bewegen. Die sich anschließenden Ausführungen lassen sich auf die hier beispielhaft genannten Listendurchlauftypen jeweils übertragen.

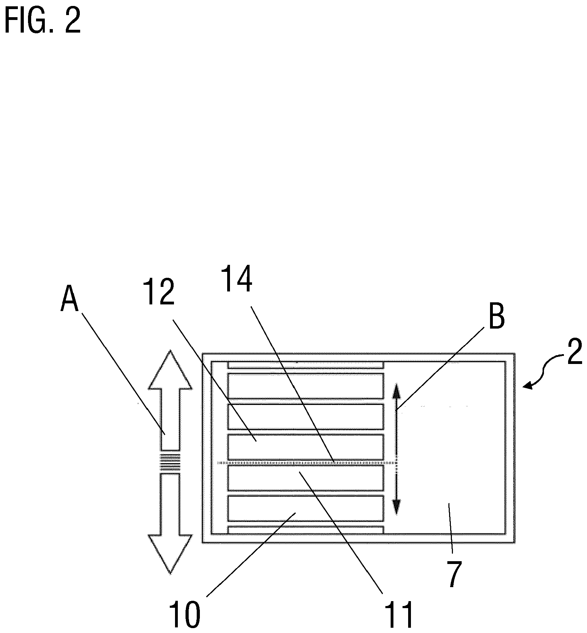

In Figur 2 ist eine Anzeigevorrichtung 2 für ein Bediensystem 1 gemäß einer ersten beispielhaften Ausführungsform der vorliegenden Erfindung dargestellt. Konkret handelt es sich um einen Listendurchlauftypen wie er in Figur 1a dargestellt ist. Dabei ist es vorgesehen, dass das Bediensystem 1 eine Speichereinrichtung (nicht dargestellt), in der die Liste an Listenelementen 10 mit einem Listenanfang 11 und einem Listenende 12 gespeichert ist, aufweist. Insbesondere bildet dabei jeweils ein Listenelement 10 den Listenanfang 11 und das Listenende 12. In der in Figur 2 dargestellten Anzeigefläche 7 sind die Listenelemente 10 in Form einer endlos rollierenden Liste angeordnet, d. h. auf der Anzeigefläche 7 schließt sich in Listendurchlaufrichtung B der Listenanfang 11 an das Listenende 12 an.

Im Gegensatz zu Endloslisten aus dem Stand der Technik, bei denen der Listendurchlauf automatisch am Listenanfang 11 bzw. Listenende 12 fortgesetzt wird, oder im Vergleich zu Listenanschlägen, bei denen ein Fortsetzen des Listendurchlaufs in die bisherige Listendurchlaufrichtung 10 grundsätzlich nicht möglich ist, wenn das Listenende 12 oder der Listenanfang 11 erreicht wird, ist es hier vorgesehen, dass beim Erreichen des Listenendes 12 oder Listenanfangs 11 der Listendurchlauf in die bisherige Listendurchlaufrichtung B gestoppt wird und nach Beendigung desjenigen Bedienvorgangs, der den Listendurchlauf in die bisherige Listendurchlaufrichtung B veranlasst hat, eine Wiederaufnahme für ein festgelegtes Zeitintervall unterbunden wird.

Dabei wird der Nutzer über das Erreichen des Listenanfangs 11 oder des Listenendes 12 durch ein optisches, akustisches und/oder haptisches Signal informiert. Erst nach Ablauf des festgelegten Zeitintervalls lässt sich der Listendurchlauf in die bisherige Listendurchlaufrichtung B fortsetzen, wobei für eine Fortsetzung eine direkte und insbesondere automatische Überführung vom Listenanfang 11 an das Listenende 12 oder vom Listenende 12 an den Listenanfang 11 erfolgt. Dabei erweist sich insbesondere der Beginn des festgelegten Zeitintervalls, der durch das Unterbrechen des Bedienvorgangs am Eingabeelement 3 festgelegt bzw. definiert ist, als vorteilhaft, weil sich dadurch vermeiden lässt, dass der Nutzer versehentlich den Listendurchlauf fortsetzt, wenn er das optische, akustische und/oder haptische Signal nicht registriert bzw. wahrnimmt.

Infolgedessen kann der Nutzer das Bediensystem 1 verwenden, ohne seine volle Aufmerksamkeit dauerhaft auf die Anzeigevorrichtung richten zu müssen. In dem konkreten Ausführungsbeispiel der Figur 2 ist es vorgesehen, dass der Nutzer durch eine animierte Bewegung A der Listenelemente 10, insbesondere eine animierte Abbremsbewegung, auf der Anzeigefläche 7 optisch auf das Erreichen des Listenanfangs 11 oder Listenendes 12 aufmerksam gemacht wird.

Hierbei ist es beispielsweise vorgesehen, dass mit abnehmendem Listenabstand zwischen einem aktuell angewählten Listenelement 10 und dem Listenende 12 oder dem Listenanfang 11 eine Listendurchlaufgeschwindigkeit, mit der ein Listendurchlauf in eine bestimmte Listendurchlaufrichtung B erfolgt, kleiner wird bis beim Erreichen des Listenendes 12 oder des Listenanfangs 11 der Listendurchlauf nicht mehr fortgesetzt wird.

Es ist auch vorstellbar, dass die Steuervorrichtung 6 die Anzeigefläche 7 derart ansteuert, dass beim Erreichen des Listenanfangs 11 oder des Listenendens 12 eine animierte oszillierende Bewegung der Listenelemente bzw. aller Listenelemente mit kleiner werdender Amplitude während des festgelegten Zeitintervalls durchgeführt wird. Dadurch erhält der Nutzer zusätzlich einen Hinweis darauf, wann das festgelegte Zeitintervall abgeschlossen ist und eine Fortsetzung des Listendurchlaufs möglich ist. Nach dem Ablauf des festgelegten Zeitintervalls ist es vorstellbar, dass ein Fortsetzen des Listendurchlaufs in die bisherige Listendurchlaufrichtung B einen erneuten Betätigungsvorgang am Eingabeelement 3 benötigt oder automatisch erfolgt. In Falle eines automatischen Fortsetzens ist es dabei vorgesehen, dass ohne weitere Betätigung des Eingabeelements 3 die Listendurchlaufgeschwindigkeit mit zunehmendem Abstand vom Listenende 12 oder Listenanfang 11 abnimmt bis der Listendurchlauf bei einem Listenelement 10 beendet wird.

Alternativ oder ergänzend ist es vorstellbar, dass der Nutzer über das Erreichen des Listenanfangs 11 oder des Listenendes 12 durch ein nicht-auswählbares Element informiert wird. Beispielsweise ist das nicht-auswählbare Element eine Trennlinie 14. Dadurch kann der Nutzer beim Erreichen des Listenanfangs 11 oder des Listenendes 12 seinen Fokus auf die Listenelemente am Listenanfang 11 bzw. Listenende 12 richten. Vorstellbar ist auch, dass die Trennlinie eine animierte Bewegung durchführt, wie z. B. eine "Bounce"-Animation, in der beim Erreichen des Listenanfangs 11 oder des Listenendes 12 die Trennlinie 14 eine leichte Schwingungsbewegung durchführt.

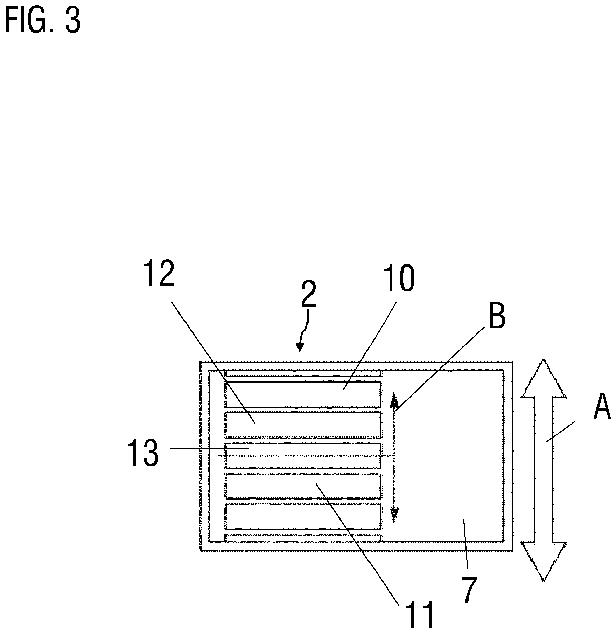

In Figur 3 ist eine Anzeigevorrichtung 2 für ein Bediensystem 1 gemäß einer zweiten beispielhaften Ausführungsform der vorliegenden Erfindung dargestellt. Hierbei wird als optisches Signal beim Erreichen des Listenanfangs 11 oder des Listenendes 12 ein Leerelement 13 genutzt. Das Leerelement 13 ist in Listendurchlaufrichtung B gesehen zwischen dem Listenanfang 11 und dem Listenende 12 angeordnet und wird jeweils beim Erreichen des Listenanfangs 11 oder des Listenendes 12 durch den Listendurchlauf angewählt. Im Gegensatz zu den Listenelementen 10 trägt das Leerelement 13 keine Informationen und bildet einen Platzhalter. Vorzugsweise unterscheidet sich das Leerelement 13 von den anderen Listenelementen 10 durch seine visuelle Darstellung. Beispielsweise ist das Leerelement 13 gegenüber den Listenelementen 10 vergrößert oder ist anders eingefärbt.

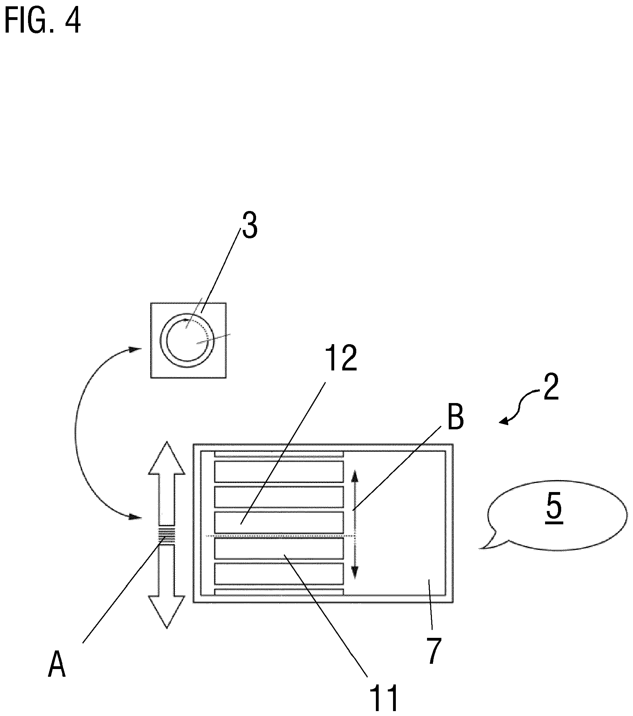

In Figur 4 ist eine Anzeigevorrichtung 2 und ein Eingabeelement 3 für ein Bediensystem 1 gemäß einer dritten beispielhaften Ausführungsform der vorliegenden Erfindung dargestellt. Im Wesentlichen entspricht die Anzeigevorrichtung 7 derjenigen aus der Figur 2, in der das Erreichen des Listenanfangs 11 optisch durch eine animierte Bewegung A kenntlich gemacht wird. Zusätzlich sind hierbei ein haptisches Signal und ein optisches Signal beim Erreichen des Listenanfangs 11 und des Listenendes 12 vorgesehen. Beispielswiese wird als akustisches Signal beim Erreichen des Listenendes 12 oder des Listenanfangs 11 ein Geräusch 5, insbesondere ein Brumm- oder Klickgeräusch, aus einem Lautsprecher des Bediensystems 1 bzw. des Infotainmentsystems ausgegeben. Vorzugsweise handelt es sich hierbei um ein dezentes akustisches Signal, um den Fahrer nicht zu überraschen. Zusätzlich ist es vorgesehen, dass ein haptisches Signal am Eingabeelement 3 ausgegeben wird, beispielsweise in Form einer Vibration am Eingabeelement 3 oder eines wahrnehmbaren Widerstands bei der Betätigung des Eingabeelements 3, mit der sonst der Listendurchlauf in die bisherige Listendurchlaufrichtung B fortgesetzt wird. Dabei ist es vorstellbar, dass das akustische, optische und/oder haptische Signal zeitgleich oder zeitversetzt zueinander ausgegeben werden. Denkbar ist auch, dass eines oder mehrere akustische, optische und/oder haptische Signale dazu verwendet werden, um den Nutzer auf den Ablauf des festgelegten Zeitintervalls aufmerksam zu machen.

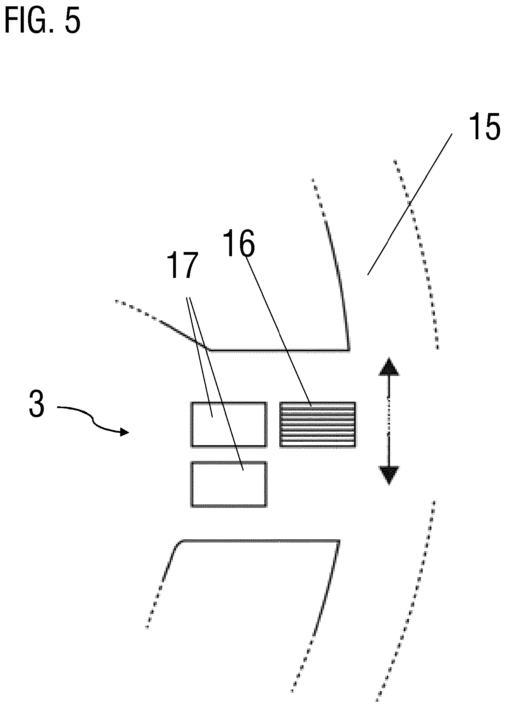

In Figur 5 ist ein Eingabeelement 3 für ein Bediensystem 1 nach der vorliegenden Erfindung dargestellt. Hierbei handelt es sich um ein Eingabeelement 3, das in ein Lenkrad 15 des Fahrzeugs integriert ist. Vorzugsweise umfasst das Eingabeelement eine Walze 16, deren Drehbewegung in intuitiver Weise mit einem Listendurchlauf, insbesondere einer horizontalen Listendurchlaufbewegung, verknüpft werden kann. Zusätzlich sind Taster 17 eingelassen, mit denen beispielswiese eine Auswahl des angewählten Listenelements 10 bestätigt werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Bediensystem
- 2: Anzeigevorrichtung
- 3: Eingabeelement
- 5: Geräusch
- 6: Steuervorrichtung
- 7: Anzeigefläche
- 10: Listenelement
- 11: Listenanfang
- 12: Listenende
- 13: Leerelement
- 14: Trennlinie
- 15: Lenkrad
- 16: Walze
- 17: Taster
- A: Animierte Bewegung
- B: Listendurchlaufrichtung

## Patentansprüche

1. Bediensystem (1) für ein Fahrzeug, wobei das Bediensystem (1)
-- eine Anzeigevorrichtung (2) mit einer Anzeigefläche (7),
-- eine Speichereinrichtung zum Speichern von Listenelementen (10), die in einer Liste mit einem Listenanfang (11) und einem Listenende (12) sortiert sind,
-- ein Eingabeelement (3) zur Anwahl eines Listenelements (10) durch einen Nutzer und
-- eine Steuervorrichtung (6), die an die Anzeigevorrichtung (2) und das Eingabeelement (3) angekoppelt ist und mit der eine wiedergebende Anzeige auf der Anzeigefläche (7) steuerbar ist,
umfasst,
wobei die Anzeigefläche (7) durch die Steuervorrichtung (6) derart ansteuerbar ist,
- dass zumindest ein Teil der Listenelemente (10) auf der Anzeigefläche (7) in Form einer endlos rollierenden Liste angezeigt wird,
- dass ein Wechsel zwischen angewählten Listenelementen (10) durch einen mittels eines Betätigungsvorgangs am Eingabeelement (3) veranlassten Listendurchlauf in eine Listendurchlaufrichtung (B) realisierbar ist,
- dass beim Erreichen des Listenanfangs (11) oder des Listenendes (12) der Listendurchlauf in eine bisherige Listendurchlaufrichtung (B) gestoppt wird,
- dass eine Wiederaufnahme des gestoppten Listendurchlaufs durch einen direkten Übergang vom Listenende (12) zum Listenanfang (11) oder durch einen direkten Übergang vom Listenanfang (11) zum Listenende (12) erst nach Ablauf eines festgelegten Zeitintervalls, das mit einem Unterbrechen des Betätigungsvorgangs am Eingabeelement (3) beginnt, freigegeben wird,
wobei das Bediensystem (1) derart ausgestaltet ist, dass beim, unmittelbar vor und/oder unmittelbar nach Erreichen des Listenanfangs (11) oder des Listenendes (12) ein optisches, akustisches und/oder haptisches Signal erzeugt wird,
wobei die Anzeigefläche (7) durch die Steuervorrichtung (6) derart ansteuerbar ist, dass die Wiederaufnahme des Listendurchlaufs nach Ablauf des Zeitintervalls automatisch realisiert wird, wobei ohne weitere Betätigung des Eingabeelements (3) eine Listenlaufgeschwindigkeit mit zunehmendem Abstand eines aktuellen Listenelements vom Listenanfang (11) oder Listenende (12) abnimmt bis der Listendurchlauf bei einem Listenelement (10) in der Liste stehen bleibt.

2. Bediensystem (1) nach Anspruchs 1, wobei die Anzeigefläche (7) durch die Steuervorrichtung (6) derart ansteuerbar ist, dass die Anzeigefläche (7) beim Erreichen des Listenendes (12) oder des Listenanfangs (11) ein optisches Signal bereitstellt.

3. Bediensystem nach Anspruchs 2, wobei die Anzeigefläche (7) durch die Steuervorrichtung (6) derart ansteuerbar ist, dass zwischen dem Listenanfang (11) und dem Listenende (12) ein Leerelement (13) angeordnet ist, wobei sich insbesondere das Leerelement (13) in seiner visuellen Darstellung von den Listenelementen (10) unterscheidet.

4. Bediensystem (1) nach Anspruch 2 oder 3, wobei die Anzeigefläche (7) durch die Steuervorrichtung (6) derart ansteuerbar ist, dass eine Listendurchlaufgeschwindigkeit von einem in Listendurchlaufrichtung bemessenen Listenabstand zwischen dem aktuell angewählten Listenelement (10) und dem Listenanfang (11) oder zwischen dem aktuell angewählten Listenelement (10) und dem Listenende (12) abhängt, wobei insbesondere mit abnehmendem Listenabstand die Listendurchlaufgeschwindigkeit kleiner wird, insbesondere kontinuierlich kleiner wird bis der Listendurchlauf am Listenende (11) oder am Listenanfang (12) stoppt.

5. Bediensystem (1) nach einem der vorhergehenden Ansprüche, wobei die Anzeigefläche (7) durch die Steuervorrichtung (6) derart ansteuerbar ist, dass nach Ablauf des Zeitintervalls die Wiederaufnahme des Listendurchlaufs durch den den Listendurchlauf in die bisherige Listendurchlaufrichtung (B) veranlassenden Betätigungsvorgang am Eingabeelement (3) realisierbar ist.

6. Bediensystem (1) nach einem der Ansprüche 2 bis 5, wobei das Bediensystem (1) derart gestaltet ist, dass beim, unmittelbar vor und/oder unmittelbar nach dem Erreichen des Listenanfangs (12) oder des Listenendes (11) neben dem optischen Signal ein haptisches Signal, beispielsweise in Form eines haptisch wahrnehmbaren Widerstands bei der Betätigung des Eingabeelements (2) oder in Form einer Vibration am Eingabeelement (3), erzeugt wird.

7. Bediensystem (1) nach einem der Ansprüche 2 bis 6, wobei das Bediensystem (1) derart gestaltet ist, dass beim, unmittelbar vor und/oder unmittelbar nach dem Erreichen des Listenanfangs (12) oder des Listenendes (11) neben dem optischen Signal ein akustisches Signal, beispielsweise in Form eines Klick- oder Brummgeräuschs (5), erzeugt wird.

8. Bediensystem (1) nach einem der vorhergehenden Ansprüche, wobei die Anzeigefläche (7) durch die Steuervorrichtung (6) derart ansteuerbar ist, dass die Wiederaufnahme des Listendurchlaufs in eine der bisherigen Listendurchlaufrichtung (B) entgegengesetzten Listendurchlaufrichtung (B) nach Beendigung eines den Listendurchlauf veranlassenden Betätigungsvorgangs am Eingabeelement (3) für ein festgelegtes Zeitintervall unterbunden wird, wobei erst nach Ablauf des Zeitintervalls die Wiederaufnahme des Listendurchlaufs in einer der bisherigen Listendurchlaufrichtung (B) folgenden oder in einer der bisherigen Listendurchlaufrichtung entgegengesetzten Listendurchlaufrichtung (B) freigegeben wird.

9. Bediensystem (1) nach einem der vorhergehenden Ansprüche, wobei das festgelegte Zeitintervall zwischen 0,3 s bis 3 s, bevorzugt 0,5 s und 2 s, besonders bevorzugt zwischen 0,75 s und 1,5 s andauert.

10. Bediensystem (1) nach einem der vorhergehenden Ansprüche, wobei die Anzeigefläche (7) durch die Steuervorrichtung (6) derart ansteuerbar ist, dass die Listenelemente (10) als Listeneinträge und/oder als Informationsfenster ausgestaltet sind, wobei insbesondere ein Listendurchlauf entlang einer geraden oder gebogenen Listendurchlaufrichtung (B) durchgeführt wird, wobei vorzugsweise die gerade Listendurchlaufrichtung horizontal oder vertikal auf der Anzeigefläche (7) verläuft.

11. Bediensystem (1) nach einem der vorhergehenden Ansprüche, wobei das Eingabeelement (3) einen Drehdrückschalter, eine Walze (16), einen Touchscreen und/oder einen Taster (17) auf einem Multifunktionslenkrad (15) oder auf einem Lenkstockhebel umfasst.

12. Bediensystem (1) nach einem der vorhergehenden Ansprüche, wobei die Anzeigefläche (7) durch die Steuervorrichtung (6) derart ansteuerbar ist, dass der Listendurchlauf mit einer Primärgeschwindigkeit oder einer Sekundärgeschwindigkeit zwischen den einzelnen Listenelementen wechselt, wobei insbesondere zur Einnahme eines Vorspulmodus bedarfsabhängig ein Wechsel zwischen der Primärgeschwindigkeit zur Sekundärgeschwindigkeit während des Listendurchlaufs realisierbar ist.

13. Verfahren zum Bedienen eines Bediensystem (1) nach einem der vorhergehenden Ansprüche, umfassend die Schritte:
-- Anwahl einzelner Listenelemente (10), die in einer Liste mit einem Listenanfang (11) und einem Listenende (12) sortiert sind, mittels eines Listendurchlaufs in eine Listendurchlaufrichtung (B),
-- Unterbinden des Listendurchlaufs beim Erreichen des Listenanfangs (11) oder des Listenendes (12) und
-- Freigabe des Listendurchlaufs in einer zur bisherigen Listendurchlaufrichtung gleichgerichteten Listendurchlaufrichtung, durch einen direkten Übergang vom Listenanfang (11) zum Listenende (12) oder durch einen direkten Übergang vom Listenende (12) zum Listenanfang (11) nach Ablauf eines festgelegten Zeitintervalls, das mit einer Unterbrechung eines Bedienvorgangs am Eingabeelement (3) beginnt,
wobei vom Bediensystem (1) ein optisches, akustisches und/oder haptisches Signal beim Erreichen des Listenanfangs (11) oder des Listenendes (12) ausgegeben wird, wobei die Anzeigefläche (7) durch die Steuervorrichtung (6) derart angesteuert wird, dass die Wiederaufnahme des Listendurchlaufs nach Ablauf des Zeitintervalls automatisch realisiert wird, wobei ohne weitere Betätigung des Eingabeelements (3) eine Listenlaufgeschwindigkeit mit zunehmendem Abstand eines aktuellen Listenelements vom Listenanfang (11) oder Listenenende (12) abnimmt bis der Listendurchlauf bei einem Listenelement (10) in der Liste stehen bleibt.

14. Fahrzeug, insbesondere Nutzfahrzeug, mit einem Bediensystem (1) nach einem der vorhergehenden Ansprüche 1 bis 12.

## Claims

1. Control system (1) for a vehicle, whereby the control system (1) comprises:
-- a display device (2) with a display surface (7),
-- a storage device for storing list elements (10) sorted in a list having a list beginning (11) and a list end (12),
-- an input element (3) for selection of a list element (10) by a user and
-- a control device (6) which is coupled to the display device (2) and the input element (3) and with which a reproducing display on the display surface (7) is controllable,
wherein the display surface (7) can be controlled by the control device (6) in such a way
- that at least some of the list elements (10) are displayed on the display surface (7) in the form of an endlessly scrolling list,
- that a change between selected list elements (10) can be implemented by a list scroll in a list scroll direction (B) initiated by means of an actuation process on the input element (3),
- that when the start of the list (11) or the end of the list (12) is reached, the list run in a previous list run direction (B) is stopped,
- that a resumption of the stopped list run by a direct transition from the end of the list (12) to the beginning of the list (11) or by a direct transition from the beginning of the list (11) to the end of the list (12) is only released after a fixed time interval has elapsed which begins with an interruption of the actuation process at the input element (3),
wherein the operating system (1) is configured in such a way that when, immediately before and/or immediately after reaching the beginning (11) or the end (12) of the list, an optical, acoustic and/or haptic signal is generated,
wherein the display surface (7) can be controlled by the control device (6) in such a way, that the list scrolling is automatically resumed after the time interval has elapsed, wherein without further actuation of the input element (3) a list scrolling speed decreases with increasing distance of a current list element from the list start (11) or list end (12) until the list scrolling stops at a list element (10) in the list.

2. Operating system (1) according to claim 1, wherein the display surface (7) can be controlled by the control device (6) in such a way that the display surface (7) provides an optical signal when the end of the list (12) or the beginning of the list (11) is reached.

3. Operating system according to claim 2, wherein the display surface (7) can be controlled by the control device (6) in such a way that a blank element (13) is arranged between the beginning (11) and the end (12) of the list, wherein preferably the blank element (13) differs in its visual representation from the list elements (10).

4. Operating system (1) according to claim 2 or 3, wherein the display surface (7) can be controlled by the control device (6) in such a way that a list scrolling speed depends on a list spacing, measured in the list scrolling direction, between the currently selected list element (10) and the start of the list (11) or between the currently selected list element (10) and the end of the list (12), wherein, preferably, the list scrolling speed becomes smaller as the list spacing decreases, preferably becomes continuously smaller until the list scrolling stops at the end of the list (11) or at the start of the list (12).

5. Operating system (1) according to one of the preceding claims, wherein the display surface (7) can be actuated by the control device (6) in such a way that, after the time interval has elapsed, the resumption of the list scroll can be realised by the actuating operation on the input element (3) causing the list scroll in the previous list scroll direction (B).

6. Operating system (1) according to one of claims 2 to 5, wherein the operating system (1) is configured in such a way that, when, immediately before and/or immediately after reaching the start of the list (12) or the end of the list (11), a haptic signal, for example in the form of a haptically perceptible resistance when the input element (2) is actuated or in the form of a vibration at the input element (3), is generated in addition to the optical signal.

7. Operating system (1) according to one of claims 2 to 6, wherein the operating system (1) is configured in such a way that when, immediately before and/or immediately after reaching the start (12) or end (11) of the list, an acoustic signal, for example in the form of a clicking or humming sound (5), is generated in addition to the optical signal.

8. Operating system (1) according to one of the preceding claims, wherein the display surface (7) can be controlled by the control device (6) in such a way that the resumption of the list scroll in a list scroll direction (B) opposite to the previous list scroll direction (B) is prevented for a fixed time interval after the end of an actuation process on the input element (3) initiating the list scroll, wherein the resumption of the list run in a list run direction following the previous list run direction (B) or in a list run direction (B) opposite to the previous list run direction is enabled only after the time interval has expired.

9. Control system (1) according to one of the preceding claims, wherein the fixed time interval lasts between 0.3 s and 3 s, preferably 0.5 s and 2 s, particularly preferably between 0.75 s and 1.5 s.

10. Operating system (1) according to one of the preceding claims, wherein the display surface (7) can be controlled by the control device (6) in such a way that the list elements (10) are designed as list entries and/or as information windows, wherein in particular a list scroll is carried out along a straight or curved list scroll direction (B), wherein preferably the straight list scroll direction runs horizontally or vertically on the display surface (7).

11. Control system (1) according to any one of the preceding claims, wherein the input element (3) comprises a rotary push button, a roller (16), a touch screen and/or a button (17) on a multifunction steering wheel (15) or on a steering column lever.

12. Operating system (1) according to one of the preceding claims, wherein the display surface (7) can be controlled by the control device (6) in such a way that the list scroll changes between the individual list elements at a primary speed or a secondary speed, wherein, in particular for adopting a fast-forward mode, a change between the primary speed and the secondary speed can be implemented as required during the list scroll.

13. A method of operating a control system (1) according to any one of the preceding claims, comprising the steps of:
-- Selecting individual list elements (10) sorted in a list with a list start (11) and a list end (12) by means of a list scroll in a list scroll direction (B),
-- Preventing the list from running through when reaching the beginning (11) or the end (12) of the list and
-- Release of the list run in a list run direction that is the same as the previous list run direction, by a direct transition from the start of the list (11) to the end of the list (12) or by a direct transition from the end of the list (12) to the start of the list (11) after the expiry of a fixed time interval that begins with an interruption of an operating process at the input element (3),
wherein an optical, acoustic and/or haptic signal is emitted by the operating system (1) when the beginning (11) or the end (12) of the list is reached, wherein the display surface (7) is controlled by the control device (6) in such a way that the resumption of the list run is automatically realised after the time interval has expired,
wherein, without further actuation of the input element (3), a list scrolling speed decreases with increasing distance of a current list element from the list start (11) or list end (12) until the list scrolling stops at a list element (10) in the list.

14. Vehicle, in particular commercial vehicle, with an operating system (1) according to one of the preceding claims 1 to 12.

## Revendications

1. Système d'exploitation (1) pour un véhicule, le système d'exploitation (1) comprenant
-- un dispositif d'affichage (2) avec une surface d'affichage (7),
-- un dispositif de mémorisation pour mémoriser des éléments de liste (10) qui sont triés dans une liste avec un début de liste (11) et une fin de liste (12),
-- un élément d'entrée (3) pour la sélection d'un élément de liste (10) par un utilisateur et
-- un dispositif de commande (6) qui est relié au dispositif d'affichage (2) et à l'élément d'entrée (3) et avec lequel un affichage de reproduction est apte à être commandé sur la surface d'affichage (7),
la surface d'affichage (7) étant apte à être commandée par le dispositif de commande (6) de telle sorte
- qu'au moins une partie des éléments de liste (10) est affichée sur la surface d'affichage (7) sous la forme d'une liste défilante sans fin,
- qu'un changement entre des éléments de liste (10) sélectionnés peut être réalisé par un défilement de liste dans une direction de défilement de liste (B) provoqué par une opération d'actionnement sur l'élément d'entrée (3),
- que, lorsque le début de la liste (11) ou la fin de la liste (12) est atteint, le défilement de la liste dans une direction de défilement de liste (B) précédente est arrêté,
- qu'une reprise du défilement de liste arrêté n'est autorisée par un passage direct de la fin de liste (12) au début de liste (11) ou par un passage direct du début de liste (11) à la fin de liste (12) qu'après écoulement d'un intervalle de temps défini qui commence par une interruption de l'opération d'actionnement sur l'élément d'entrée (3),
le système d'exploitation (1) étant conçu de telle sorte qu'un signal optique, acoustique et/ou haptique est généré immédiatement avant et/ou immédiatement après que le début de la liste (11) ou la fin de la liste (12) a été atteint,
la surface d'affichage (7) étant apte à être commandée par le dispositif de commande (6) de telle sorte que le défilement de la liste soit réalisé automatiquement après l'écoulement de l'intervalle de temps, une vitesse de défilement de la liste diminuant sans autre actionnement de l'élément d'entrée (3) à mesure que la distance entre un élément actuel de la liste et le début (11) de la liste ou la fin (12) de la liste diminue jusqu'à ce que le défilement de la liste s'arrête au niveau d'un élément de liste (10) dans la liste.

2. Système d'exploitation (1) selon la revendication 1, dans lequel la surface d'affichage (7) est apte à être commandée par le dispositif de commande (6) de telle sorte que la surface d'affichage (7) fournisse un signal optique lorsque la fin de liste (12) ou le début de liste (11) est atteint.

3. Système d'exploitation selon la revendication 2, dans lequel la surface d'affichage (7) est apte à être commandée par le dispositif de commande (6) de telle sorte qu'un élément vide (13) est disposé entre le début de la liste (11) et la fin de la liste (12), l'élément vide (13) se distinguant notamment des éléments de la liste (10) par sa représentation visuelle.

4. Système d'exploitation (1) selon la revendication 2 ou 3, dans lequel la surface d'affichage (7) est apte à être commandée par le dispositif de commande (6) de telle sorte qu'une vitesse de défilement de la liste dépende d'une distance entre l'élément de liste (10) actuellement sélectionné et le début de la liste (11) ou entre l'élément de liste (10) actuellement sélectionné et la fin de la liste (12), mesurée dans le sens de défilement de la liste, la vitesse de défilement de la liste diminuant en particulier lorsque la distance de liste diminue, en particulier diminuant de manière continue jusqu'à ce que le défilement de la liste s'arrête à la fin de la liste (11) ou au début de la liste (12).

5. Système d'exploitation (1) selon l'une des revendications précédentes, dans lequel la surface d'affichage (7) est apte à être commandée par le dispositif de commande (6) de telle sorte qu'après l'écoulement de l'intervalle de temps, la reprise du défilement de la liste peut être réalisée par l'opération d'actionnement sur l'élément d'entrée (3) qui provoque le défilement de la liste dans la direction de défilement de la liste (B) précédente.

6. Système d'exploitation (1) selon l'une des revendications 2 à 5, le système d'exploitation (1) étant conçu de telle sorte que, immédiatement avant et/ou immédiatement après que le début de la liste (12) ou la fin de la liste (11) est atteint, un signal haptique soit généré en plus du signal optique, par exemple sous la forme d'une résistance perceptible au toucher lors de l'actionnement de l'élément d'entrée (2) ou sous la forme d'une vibration sur l'élément d'entrée (3).

7. Système d'exploitation (1) selon l'une des revendications 2 à 6, dans lequel le système d'exploitation (1) est conçu de telle sorte que, immédiatement avant et/ou immédiatement après que le début de la liste (12) ou la fin de la liste (11) est atteint, un signal acoustique, par exemple sous la forme d'un clic ou d'un bourdonnement (5), soit généré en plus du signal optique.

8. Système d'exploitation (1) selon l'une des revendications précédentes, dans lequel la surface d'affichage (7) est apte à être commandée par le dispositif de commande (6) de telle sorte que la reprise du défilement de la liste dans une direction de défilement de la liste (B) opposée à la direction de défilement de la liste (B) précédente soit empêchée pendant un intervalle de temps défini après la fin d'une opération d'actionnement sur l'élément d'entrée (3) qui provoque le défilement de la liste, la reprise du défilement de la liste dans un sens de défilement de la liste (B) selon le sens de défilement de liste (B) précédent ou selon un sens de défilement de liste (B) opposé au sens de défilement de liste précédent n'étant autorisée qu'après l'écoulement de l'intervalle de temps.

9. Système d'exploitation (1) selon l'une des revendications précédentes, dans lequel l'intervalle de temps fixé dure entre 0,3 s et 3 s, de préférence entre 0,5 s et 2 s, de manière particulièrement préférée entre 0,75 s et 1,5 s.

10. Système d'exploitation (1) selon l'une des revendications précédentes, dans lequel la surface d'affichage (7) est apte à être commandée par le dispositif de commande (6) de telle sorte que les éléments de liste (10) soient conçus comme des entrées de liste et/ou comme des fenêtres d'information, un défilement de liste étant notamment effectué selon une direction de défilement de liste (B) droite ou incurvée, la direction de défilement de liste droite s'étendant de préférence horizontalement ou verticalement sur la surface d'affichage (7).

11. Système d'exploitation (1) selon l'une des revendications précédentes, dans lequel l'élément d'entrée (3) comprend un bouton poussoir rotatif, un rouleau (16), un écran tactile et/ou un bouton-poussoir (17) sur un volant multifonction (15) ou sur un levier de colonne de direction.

12. Système d'exploitation (1) selon l'une des revendications précédentes, dans lequel la surface d'affichage (7) est apte à être commandée par le dispositif de commande (6) de telle sorte que le défilement de la liste alterne entre les différents éléments de la liste à une vitesse primaire ou à une vitesse secondaire, un changement entre la vitesse primaire et la vitesse secondaire étant apte à être réalisé en fonction des besoins pendant le défilement de la liste, en particulier pour adopter un mode d'avance rapide.

13. Procédé de fonctionnement d'un système d'exploitation (1) selon l'une des revendications précédentes, comprenant les étapes suivantes :
-- sélection d'éléments de liste individuels (10), qui sont triés dans une liste avec un début de liste (11) et une fin de liste (12), au moyen d'un défilement de liste dans une direction de défilement de liste (B),
-- empêcher le défilement de la liste lorsque le début de la liste (11) ou la fin de la liste (12) est atteint, et
-- autoriser le défilement de la liste dans une direction de défilement de la liste orientée dans le même sens que la direction de défilement de la liste précédente, par un passage direct du début de la liste (11) à la fin de la liste (12) ou par un passage direct de la fin de la liste (12) au début de la liste (11) après l'écoulement d'un intervalle de temps fixé, qui commence par une interruption d'une opération de commande sur l'élément d'entrée (3),
un signal optique, acoustique et/ou haptique étant émis par le système d'exploitation (1) lorsque le début de liste (11) ou la fin de liste (12) est atteint, la surface d'affichage (7) étant commandée par le dispositif de commande (6) de telle sorte que la reprise du défilement de la liste soit réalisée automatiquement après l'écoulement de l'intervalle de temps, une vitesse de défilement de la liste diminuant, sans autre actionnement de l'élément d'entrée (3), avec l'augmentation de la distance d'un élément actuel de la liste par rapport au début (11) ou à la fin (12) de la liste jusqu'à ce que le défilement de la liste s'arrête à un élément (10) de la liste.

14. Véhicule, notamment véhicule utilitaire, comportant un système d'exploitation (1) selon l'une des revendications 1 à 12 précédentes.
